# EUROPEAN PATENT SPECIFICATION

(11) **EP 3 675 213 B1**
(45) Date of publication and mention of the grant of the patent: **10.05.2023**
(21) Application number: 19175834.1
(22) Date of filing: 22.05.2019
(51) Int. Cl.: H01M 50/264, H01M 50/209, H01M 50/271

(54) **A BATTERY PACK**
BATTERIEPACK
BLOC-BATTERIE

(30) Priority: 30.12.2018 CN 201811648926
(43) Date of publication of application: 01.07.2020
(73) Proprietor: Contemporary Amperex Technology Co., Limited, Jiaocheng District Ningde City, Fujian 352100 (CN)
(72) Inventor: CHEN, Xingdi, Ningde City, Fujian 352100 (CN); YOU, Kaijie, Ningde City, Fujian 352100 (CN); ZHOU, Linggang, Ningde City, Fujian 352100 (CN); WANG, Peng, Ningde City, Fujian 352100 (CN); XIANG, Yanhuo, Ningde City, Fujian 352100 (CN); CHEN, Ning, Ningde City, Fujian 352100 (CN)
(74) Representative: Ran, Handong

(56) References cited:
- CN-A- 107 425 153
- JP-A- H1 125 939
- US-A1- 2005 164 080
- US-A1- 2014 057 137
- US-A1- 2016 218 388

## Description

### Technical Field

The invention relates to the technical field of batteries, and more particularly, to a battery pack.

### Background Art

The battery pack includes an enclosure and a plurality of battery modules , wherein the enclosure includes an upper cover and a lower enclosure, and each of the battery modules includes a plurality of battery cells and a plurality of busbars electrically connected with said plurality of battery cells. In the prior art, the battery pack is assembled by fixing the battery modules in the lower enclosure with bolts, and then covering the upper cover. However, since the upper cover is not connected to the battery modules, which means that the upper cover and the battery modules are separated from each other, the overall rigidity of the battery modules is low, and the plurality of busbars of the battery modules are more prone to break in the vibration test, resulting in a short circuit of the battery modules, and subsequently causing a fire or explosion of the battery pack.

US 2014/0057137 A1 is disclosing a battery pack that includes at least one battery, a protective circuit module electrically connected to the battery, a case accommodating the battery and the protective circuit module, and a film-shaped cover covering the case. The battery pack has an edge portion of the cover is welded to the top end of the case.

US 2005/0164080 A1 discloses a battery pack. The battery pack comprises an outer case for housing a rechargeable battery and a battery circuit therein is composed of an upper case and a lower case, each being formed as a half-shell body. The respective bottom face of the upper case and the lower case are formed of film members and are integrally formed with resin moldings forming circumferential side faces.

JP H11 25939 A discloses a battery pack. The battery pack has a hexahedral case composed of a box body and a lid. In the case a plurality of unit cells are housed to be fixed to the lid by adhesive tapes having no base materials. With the battery pack of such the constitution, the unit cells are fixed via the lid of the case and, even if the battery pack is mistakenly dropped, shifting caused by impacts thereof is prevented between the unit cells and, thus the breaking of the case is prevented and impact resistance is increased.

US 2016/0218388 A1 discloses a battery module having a minimized size. The battery module includes a secondary battery unit including a plurality of secondary batteries arranged with a predetermined interval in horizontal and vertical directions, a compression plate wrapping an exterior portion of the secondary battery unit and compressing the secondary battery unit with a predetermined pressure, and a housing accommodating the secondary battery unit combined with the compression plate, the housing including one or more bolt fastening units corresponding to portions between the plurality of secondary batteries arranged in the horizontal direction and protruding from the bottom surface of the housing and one or more bolts fastened with the one or more bolt fastening units by way of the portions between the plurality of secondary batteries arranged in the horizontal direction while passing through the compression plate.

CN 107 425 153 A discloses a battery pack, wherein the battery pack consists of multiple battery units sequentially arranged along an orientation to form the battery pack. The battery units are fixed together by a fixing band, which is wound around the arranged multiple battery units in a groove.

### Summary of the Invention

Therefore, a battery pack is required for solving the technical problem of failure in the vibration test due to the fact that the upper cover is only connected with the lower enclosure in the prior art.

For the above purposes, there is provided with a battery pack comprising:
an enclosure including an upper cover and a lower enclosure, wherein the upper cover is located above and in sealed connection with the lower enclosure;
a plurality of battery modules disposed inside the enclosure; and
a first bonding member disposed on an upper surface of the plurality of battery modules and intended for connecting the plurality of battery modules with the upper cover.

Each of the plurality of battery modules includes a battery cell array, which comprises a plurality of battery cells arranged along a horizontal direction and a plurality of busbars electrically connected with the plurality of battery cells.

Each of the plurality of battery cells includes an electrode assembly and a cell case, in which the electrode assembly is contained in the cell case and includes a first electrode plate, a second electrode plate, and a separator disposed therebetween.

The electrode assembly is of a flat wound configuration, and the outer surfaces of the electrode assembly include two flat sides facing each other along a vertical direction; or the electrode assembly is of a laminated configuration, in which the first electrode plate, the separator and the second electrode plate are laminated along a vertical direction.

The cell case includes two first surfaces and two second surfaces, wherein an area of each of the two first surfaces is larger than an area of each of the two second surfaces, wherein the two second surfaces of each of the plurality of battery cells in the battery cell array face each other along the horizontal direction, and the two first surfaces of each of the plusality of battery cells in the battery cell array face each other along the vertical direction.

Each of the plurality of battery modules further includes two straps arranged at an interval, each strap encompassing a periphery of the battery cell array and comprising two long sides and two short sides, wherein the two long sides face to the two first surfaces and extend along the horizontal direction; and the two short sides face to the two second surfaces and extend along the vertical direction; and
a first groove is formed between two adjacent long sides above one of the two first surfaces facing the upper cover, and the first bonding member is disposed within the first groove and extends along the horizontal direction.

Preferably, the plurality of battery cells are connected with the upper cover via first bonding member, one of the two first surfaces facing the upper cover in contact with the first bonding member.

Preferably, each of the plurality of battery modules comprises at least two battery cell arrays which are stacked along the vertical direction.

Preferably, a convex portion disposed opposite to the first groove and bonded with the first bonding member is formed in an inner surface of the upper cover.

Preferably, the convex portion extend into the first groove, and the thickness of the first bonding member is smaller than a thickness of the two adjacent long sides above the one of the two first surfaces facing the upper cover.

Preferably, the battery pack further comprises a second bonding member disposed on a lower surface of one of the plurality of battery modules, and the lower surface of the one of the plurality of battery modules is connected with the lower enclosure through the second bonding member.

Preferably, a second groove is formed between two adjacent long sides below one of the two first surfaces away from the upper cover, and the second bonding member is disposed within the second groove and extends along the horizontal direction.

Preferably, each of the plurality of battery modules further comprise two end plates respectively disposed at two ends of the battery cell array along the horizontal direction; the strap encompasses a periphery of the battery cell array and the two end plates; and a top surface of each of the two end plates is provided with a boss protruding out of an upper surface of the battery module and located between the two adjacent long sides above the one of the two first surfaces facing the upper cover.

Preferably, each of the plurality of battery modules is provided with two straps; and a plurality of convex portions respectively corresponding to the first groove of each of the plurality of battery modules are formed in the upper cover.

Unlike the prior art, the above technical solution employs a first bonding member disposed on the upper surface of the battery modules and intended for connecting the battery modules with the upper cover. So, the battery modules are connected with the upper cover via the first bonding member to form a whole, which strengthens the connection strength between the upper cover and the battery modules and improves the overall rigidity of the battery modules.

### Brief Description of the Drawings

Fig. 1 illustrates an exploded view of the battery pack as described in the preferred embodiment;
Fig. 2 illustrates a structural view of the upper cover as described in the preferred embodiment;
Fig. 3 illustrates a structural view of the battery modules after the busbars are electrically connected with the battery cells as described in the preferred embodiment;
Fig. 4 illustrates an exploded view of the battery modules as described in the preferred embodiments;
Fig. 5 illustrates an exploded view of the battery cells as described in the preferred embodiment;
Fig. 6 illustrates a cross-sectional view of the wound electrode assemblies as described in the preferred embodiment;
Fig. 7 illustrates a cross-sectional view of the laminated electrode assemblies as described in the preferred embodiment;
Fig. 8 illustrates a sectional view of the battery pack as described in the preferred embodiment;
Fig. 9 illustrates an enlarged view of A in Fig. 8.
Fig. 10 illustrates a structural diagram of the end plate as described in the preferred embodiment;

Description of drawing reference signs:
1 Upper cover,
11 Convex portion,
2 Battery module,
20 Battery cell array,
21 Battery cell,
211 Electrode assembly,
2111 First electrode plate,
2112 Second electrode plate,
2113 Separator,
2114 Flat side,
212 Cell case,
2121 First surface,
2122 Second surface,
213 Electrode terminal connector,
214 Cover plate,
215 Electrode terminal,
22 Strap,
221 Long side,
222 Short side,
23 First groove,
24 End plate,
241 Boss,
242 Strap limit slot,
25 Insulating member,
26 Busbar,
3 Lower enclosure,
4 First bonding member
5 Second bonding member

### Detailed Description of the Preferred Embodiments

Example embodiments will now be described in detail hereinafter with reference to the accompanying drawings in order to fully explain the technical content, structural features, purposes and effects of the present technical solution.

Unless otherwise expressly stated and defined, the terms "first" and "second" in this application are only used for description, and should not be construed as indicating or implying the relative importance; the term "a plurality of" means two or more; and the terms "connection" and "fixation" should be construed in a broad sense. For example, "connection" may be fixed connection, removable connection, integral connection, or electrical connection; also, it may be direct connection or indirect connection through an intermediary. For those skilled in the art, the specific meanings of the above terms in the present application can be understood on a case-by-case basis.

In the present application, the direction indicated by the arrow x in all the drawings means the length direction, the direction indicated by the arrow y means the width direction, and the direction indicated by the arrow z means the vertical direction. The horizontal direction means the direction parallel to the horizontal plane, and may be said length or width direction. In addition, the horizontal direction includes not only the direction absolutely parallel to the horizontal plane but also the direction generally parallel to the horizontal plane according to conventional engineering cognition. The vertical direction means the direction perpendicular to the horizontal plane, and includes not only the direction absolutely perpendicular to the horizontal plane but also the direction generally perpendicular to the horizontal plane according to conventional engineering cognition. Moreover, "upper", "lower", "top", "bottom" and the like described in this application are expressed relative to the vertical direction.

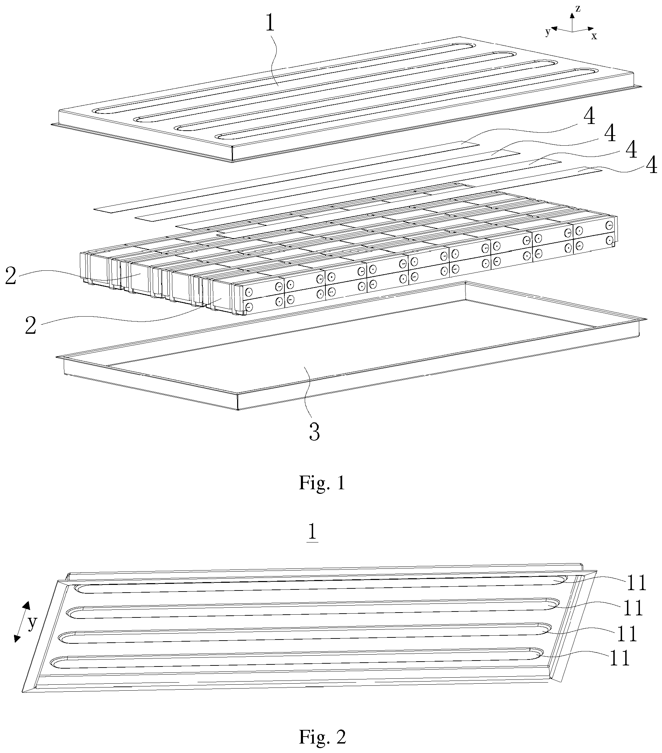

With reference to Fig. 1, the embodiment relates to a battery pack including an enclosure, a plurality of battery modules 2, and a first bonding member 4, wherein the enclosure includes an upper cover 1 and a lower enclosure 3 arranged below and in sealed connection with said upper cover 1. The sealed connection between the upper cover 1 and the lower enclosure 3 prevents external moisture from entering the inside of the battery pack to cause a short circuit. The battery pack can be mounted directly on the vehicle as a power source. A plurality of battery modules 2 are disposed in the enclosure, and the first bonding member 4 is disposed on the upper surface of the battery modules 2 which are connected to the upper cover 1 through the first bonding member 4.

The first bonding member 4 may be a liquid, paste or solid adhesive such as double-sided tape, glue or the like. Preferably, the first bonding member 4 is a type of structural adhesive, which is liquid or pasty before solidification. The structural adhesive is applied between the battery modules 2 and the upper cover 1 and then solidifies, firmly bonding the battery modules 2 onto the upper cover 1.

The battery modules 2 are connected with the upper cover 1 via the first bonding member 4 to form a whole, which strengthens the connection strength between the upper cover 1 and the battery modules 2, thereby improving the overall rigidity of the battery modules 2 and preventing the battery pack from catching a fire or exploding in the vibration test.

Fig. 2 shows the upper cover 1 viewed from the bottom along the vertical direction (the direction indicated by the arrow z).A plurality of convex portions 11 are formed in the inner surface of the upper cover 1, and are arranged corresponding to the plurality of first bonding members 4, so as to establish a connection therebetween.

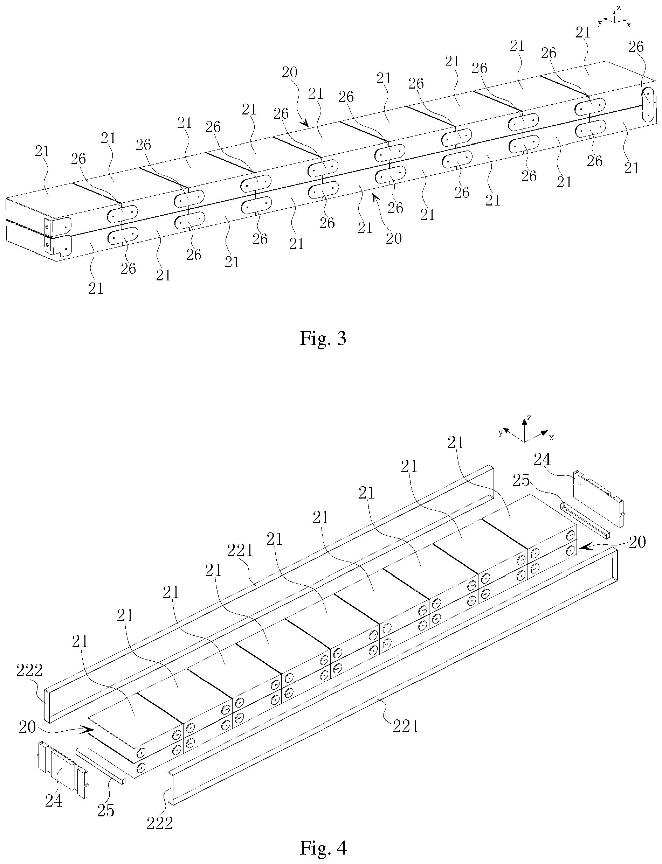

As shown in Fig. 3 and Fig. 4, the battery modules 2 in this embodiment include a battery cell array 20, which comprises a plurality of battery cells 21 arranged along the horizontal direction (e.g., the length direction indicated by the arrow x), and a plurality of busbars 26 electrically connected with the battery cells 21.

Alternatively, the battery modules 2 include at least two battery cell arrays 20, which are stacked along the vertical direction (the direction indicated by the arrow z). When the battery modules 2 are provided with more than two battery cell arrays 20, the adjacent battery cell arrays 20 may be fixed with structural adhesive, with the uppermost layer of battery cell arrays 20 fixed onto the upper cover 1 with structural adhesive. In other embodiments, there may be only one battery cell array 20.

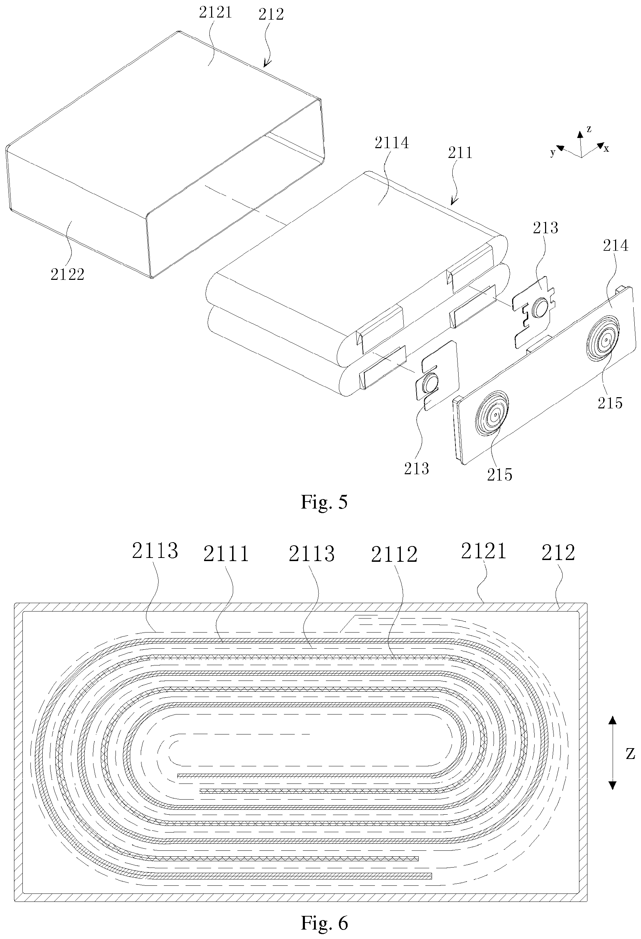

According to the invention, as shown in Fig. 4 and Fig. 5 , the battery modules 2 further include a strap 22 encompassing the periphery of the battery cell array 20 and comprising two long sides 221 and two short sides 222, wherein the long sides 221 and the first surfaces 2121 of the battery cells 21 face each there and extend along the horizontal direction (the direction indicated by the arrow x), while the short sides 222 and the second surfaces 2122 of the battery cells 21 face each other and extend along the vertical direction (the direction indicated by the arrow z). In other embodiments, the battery modules 2 may be fixed with compression strips, side panels or bolts.

Preferably, in this embodiment, the battery cell array 20 may be fixed by encompassing the periphery of the battery cell array 20 with the strap 22, which is superior to other methods in terms of light weight.

According to the invention, the battery modules 2 are provided with at least two (e.g., 2 or 3) strap 22. The two strap 22 are arranged along the width direction (the direction indicated by the arrow y) at an interval.

Alternatively, as shown in Fig. 4, in this embodiment, the battery cell array 20 further includes an insulating member 25 having a first surface and a second surface, wherein the first surface is located on the side of the battery cell array 20 and the second surface on the bottom of the battery cell array 20, and one insulating member 25 is disposed on each side of the bottom of the battery cell array 20. The strap 22 encompasses the periphery of the end plates 24, the battery cells 21, and the insulating members 25. The insulating members 25 not only play the role of insulation protection but also prevent uneven force distribution when the battery cells 21 are partially tightened by the strap 22.

Alternatively, as shown in Fig. 4, the battery modules 2 in this embodiment further include two end plates 24 disposed on both ends of the battery cell array 20 along the length direction (the direction indicated by the arrow x). The strap 22 encompasses the periphery of the battery cell array 20 and the two end plates 24.

As shown in Fig. 5, the battery cell 21 includes electrode assemblies 211, a cell case 212, electrode terminal connectors 213, and a cover plate 214. The cell case 212 may be hexahedral or in other shape. The cell case 212 has an inner space accommodating the electrode assemblies 211 and electrolyte. In addition, the cell case 212 also has an opening. The electrode assemblies 211 are contained in the cell case 212; the cover plate 214 covers the opening, and is intended for enclosing the electrode assemblies 211 in the cell case 212; and the electrode assemblies 211 and the electrode terminals 215 are electrically connected by the electrode terminal connectors 213. In this embodiment, there are two electrode terminal connectors 213, which are the positive terminal connector 213 and the negative terminal connector 213, respectively. The cell case 212 may be made of aluminum, aluminum alloy or plastic materials.

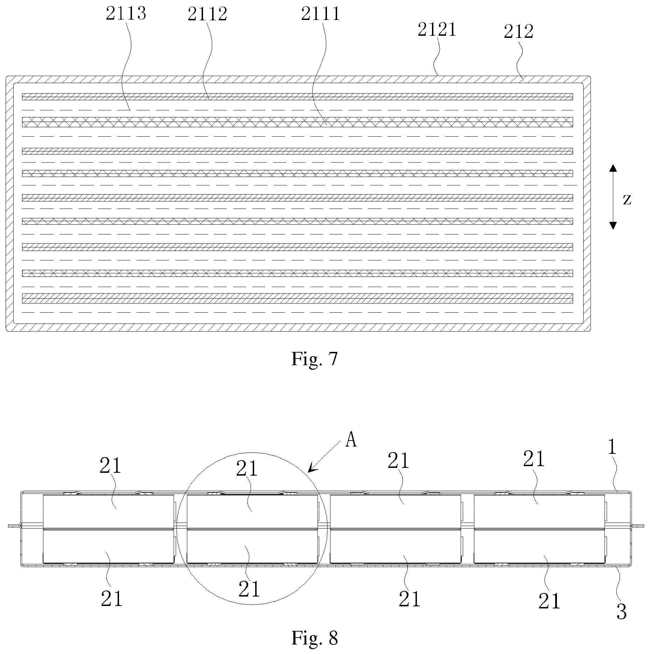

The electrode assemblies 211 are contained in the cell case 212, and include a first electrode plate 2111, a second electrode plate 2112, and a separator 2113 interposed therebetween. The first electrode plate 2111 may be positive or negative, and the second electrode plate 2112 is opposite in polarity to the first electrode plate 2111, which mean that the second electrode plate 2112 is negative or positive accordingly. The separator 2113 is an insulator interposed between the first electrode plate 2111 and the second electrode plate 2112. The electrode assemblies 211 may be of a wound configuration (as shown in Fig. 6) or a laminated configuration (as shown in Fig. 7).

In the embodiment, the first electrode plate 2111 is positive, while the second electrode plate 2112 is negative. Similarly, in other embodiments, the first electrode plate 2111 may be negative while the second electrode plate 2112 may be positive. Furthermore, the positive electrode active mass is applied onto the coating area of the positive electrode plate, and the negative electrode active mass is applied onto the coating area of the negative electrode plate. The uncoated area extending from the coating area functions as an electrode tab, and the electrode assemblies 211 include two electrode tabs, i.e. a positive electrode tab and a negative electrode tab, wherein the positive electrode tab extends from the coating area of the positive electrode plate, while the negative electrode tab extends from the coating area of the negative electrode plate. The positive electrode tab and the positive electrode terminal are electrically connected by the positive terminal connector, while the negative electrode tab and the negative electrode terminal are electrically connected by the negative terminal connector.

The cell case 212 is substantially hexahedral, and includes two first surfaces 2121 and two second surfaces 2122, wherein the area of the first surfaces 2121 is larger than that of the second surfaces 2122. In each battery cell array 20, the two second surfaces 2122 of each battery cell 21 face each other along the horizontal direction (e.g., the length direction indicated by the arrow x), while the two first surfaces 2121 face each other along the vertical direction (the length direction indicated by the arrow z).

Alternatively, the first surface 2121 of the battery cell 21 facing the upper cover 1 is in contact with the first bonding member 4 so as to establish the connection with the upper cover 1 through the first bonding member 4.

As shown in Fig. 6, when the electrode assemblies 211 are of a flat wound configuration, the outer surfaces of the electrode assemblies 211 include two flat sides 2114 facing each other along the vertical direction (the direction indicated by the arrow z), i.e. the flat sides 2114 and the first surfaces 2121 face each other. The electrode assemblies 211 are substantially hexahedral, and the flat sides 2114 are substantially parallel to the winding axis and are the largest outer surfaces. The flat sides 2114 may be a relatively flat surface, not necessarily a completely flat plane.

As shown in Fig. 7, when the electrode assemblies 211 are of a laminated configuration, the first electrode plate 2111, the separator 2113, and the second electrode plate 2112 are stacked along the vertical direction, i.e. the surface of the first electrode plate 2111 and the first surface 2121 face each other.

Inevitably, the electrode assemblies 211 expand in the thickness direction of the first electrode plate 2111 during charging and discharging process(in the electrode assemblies 211 of a wound configuration, the expansion force is the largest in the direction perpendicular to the flat side 2114; while in the electrode assemblies 211 of a laminated configuration, the expansion force is the largest along the stacking direction of the first electrode plate 2111 and the second electrode plate 2112.)

In this embodiment, the flat sides 2114 of the wound electrode assemblies 211 face the vertical direction (the direction indicated by the arrow z). Or the first electrode plates 2111 and the second electrode plates 2112 of the laminated electrode assemblies 211 are stacked in the vertical direction (the direction indicated by the arrow z). It can be seen that whether the electrode assemblies 211 employ a wound configuration or a laminated configuration, the direction of the maximum expansion force exerted by the electrode assemblies 211 on the cell case 212 is vertical.

In the prior art, in the battery cells 21 of the battery modules 2, the direction of the maximum expansion force exerted by the electrode assemblies 211 on the cell case 212 is horizontal. Since the dimension of the battery module 2 along the horizontal direction is much larger than that along the vertical direction (e.g., limited by the height of the vehicle chassis, it is required that more battery cells 21 should be stacked along the horizontal direction, thus the expansion force accumulates), the battery module 2 in the prior art bears quite a big expansion force in the horizontal direction. In turn, very thick end plates 24 are required on both sides of the battery module 2 along the horizontal direction to resist the expansion force, resulting in the reduction of the energy density of the battery module 2. In this embodiment, since the direction of the maximum expansion force exerted by the electrode assemblies 211 on the cell case 212 is vertical, and the number of the battery cells 21 stacked along the vertical direction is small, the maximum expansion force of the battery modules 2 can be greatly reduced compared with the prior art.

In addition, since the battery cells 21 generate gases inside the cell case 212 during charging and discharging, the generated gases impose a force on the cell case 212, thereby exacerbating the outward expansion of the cell case 212. Since the area of the first surfaces 2121 is larger than that of the second surfaces 2122, and the two first surfaces 2121 of the battery cells 21 face each other along the vertical direction, the direction of the maximum force exerted by the gases on the cell case 212 is also vertical, which further reduces the maximum expansion force of the battery modules 2 compared to the prior art.

In this embodiment, since the first bonding member 4 is disposed between the battery modules 2 and the upper cover 1, and the direction of the maximum expansion force of the battery modules 2 is vertical, the battery modules 2 and the bonding member 4 are more closely fitted to prevent the first bonding member 4 from falling off.

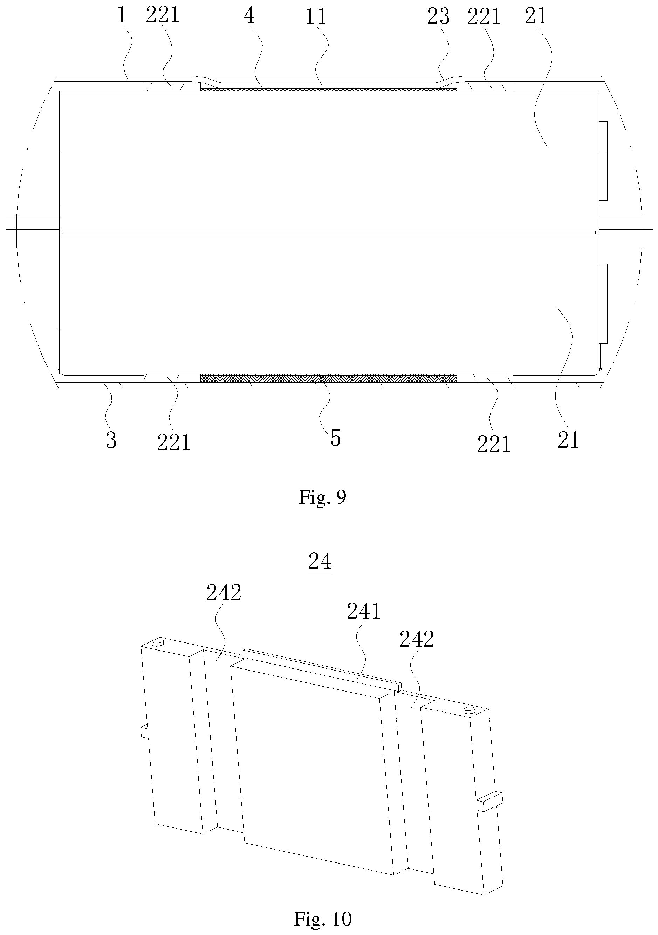

As shown in Fig. 8 and Fig. 9, in the embodiment, a first groove 23 is formed between two adjacent long sides 221 above the first surface 2121, in which the first bonding member 4 is arranged and extends along the length direction (the direction indicated by the arrow x). The unsolidified first bonding member 4 is coated onto the upper surfaces of the battery modules 2, and is limited by the adjacent two long sides 221 located above the first surface 2121. Preferably, in the embodiment, the first bonding member 4 is arranged in the first groove 23 and extends along the horizontal direction (the direction indicated by the arrow x).

Alternatively, a convex portion 11 disposed opposite to the first groove 23 is arranged on the inner surface of the upper cover 1, and said convex portion 11 is bonded onto the first bonding member 4 which is a type of liquid or paste adhesive before solidification. In this situation, the convex portion 11 arranged on the inner surface of the upper cover 1 can, on the one hand, enhance the rigidity of the upper cover 1 to resist the upward expansion force of the battery modules 2, and on the other hand, reduce the consumption of the first bonding member 4 which is a type of liquid or paste adhesive before solidification (There is no need to coat the entire upper surface of the battery modules 2 with adhesive.).

Alternatively, the convex portion 11 protrudes into the first groove 23, and the thickness of the first bonding member 4 is smaller than that of the long sides 221. Since the first bonding member 4 is thinner than the long sides 221, more space can be reserved to increase the thickness of the convex portion 11, which further enhances the rigidity of the upper cover 1, and further reduces the consumption of adhesive, so that the situation of adhesive overflowing is avoided.

Alternatively, each battery module 2 is provided with two straps 22, the upper cover 1 is provided with a plurality of convex portions 11 which respectively correspond to the first groove 23 in each battery module 2, and the first bonding member 4 is disposed in the first groove 23. Therefore, the inner surface of the upper cover 1 is provided with a plurality of convex portions 11 respectively corresponding to the plurality of first bonding members 4 as shown in Fig. 1, further strengthening the connection between the battery modules 2 and the upper cover 1.

Alternatively, the battery pack further includes a second bonding member 5 disposed on the lower surfaces of the battery modules 2, by which the lower surfaces of the battery modules 2 are connected to the lower enclosure 3. Therefore, the upper cover 1, the battery modules 2, and the lower enclosure 3 are integrated as a whole via the first bonding member 4 and the second bonding member 5 so as to prevent the relative vibration therebetween. Preferably, the second bonding member 5 is a type of structural adhesive.

Alternatively, a second groove (Not marked, overlapped with the second bonding member 5 in Fig. 9) is formed between two adjacent long sides 221 below the first surfaces 2121, in which the second bonding member 5 is arranged and extends along the horizontal direction (the direction indicated by the arrow x). In this way, the consumption of the second bonding member 5 is reduced, and the weight and cost are lowered accordingly.

As shown in Fig. 10, in the embodiment, the top surface of the end plate 24 is provided with a boss 241 which protrudes from the upper surfaces of the battery modules 2 and is located between two adjacent long sides 221. In this way, a first groove 23 is formed between the two bosses 241 on the two end plates 24 disposed on both ends of the battery cell array 20 along the length direction and two adjacent long sides 221, in which the first bonding member 4 is arranged. Thus the bosses 241 can limit the unsolidified first bonding member 4 (e.g., the first adhesive member 4 is in liquid state at this time) to prevent the loss of the first unsolidified bonding member.

In this embodiment, the end plates 24 are also provided with a strap limit slot 242, which extends along the vertical direction and is used for limiting the strap 22.

During the assembly, the second surfaces 2122 of the plurality of battery cells 21 can be fitted to each other and stacked along the horizontal direction (e.g., the length direction indicated by the arrow x) to form a battery cell array 20; two battery cell arrays are stacked along the vertical direction (the direction indicated by the arrow z) with two end plates 24 arranged at both ends; and the two straps 22 encompass the periphery of the battery cell arrays 20 and the two end plates 24, forming a plurality of battery modules 2 stacked along the width direction (the direction indicated by the arrow y). The first bonding member 4 disposed between the two straps 22 is bonded onto the convex portion 11 arranged on the inner surface of the upper cover 1; the battery modules 2 are connected with the upper cover 1 through the first bonding member, integrating the two as a whole, so as to prevent the battery pack from catching a fire or explosion in the vibration test.

## Claims

1. A battery pack, comprising:
- an enclosure including an upper cover (1) and a lower enclosure (3), wherein the upper cover (1) is located above and in sealed connection with the lower enclosure (3);
- a plurality of battery modules (2) disposed inside the enclosure; and
- a first bonding member (4) disposed on an upper surface of the plurality of battery modules (2) and for connecting the plurality of battery modules (2) with the upper cover (1)
wherein
- each of the plurality of battery modules (2) includes a battery cell array (20) comprising a plurality of battery cells (21) arranged along a horizontal direction and a plurality of busbars (26) electrically connected with the plurality of battery cells (21);
- each of the plurality of battery cells (21) includes an electrode assembly (211) and a cell case (212), in which the electrode assembly (211) is contained in the cell case (212) and includes a first electrode plate (2111), a second electrode plate (2112), and a separator (2113) disposed therebetween;
- the electrode assembly (211) is of a flat wound configuration, and outer surfaces of the electrode assembly (211) include two flat sides (2114) facing each other along a vertical direction; or the electrode assembly (211) is of a laminated configuration, in which the first electrode plate (2111), the separator (2113) and the second electrode plate (2112) are laminated along a vertical direction; and
- the cell case (212) includes two first surfaces (2121) and two second surfaces (2122), wherein an area of each of the two first surfaces (2121) is larger than an area of each of the two second surfaces (2122); the two second surfaces (2122) of each of the plurality of battery cells (21) in the battery cell array (20) face each other along the horizontal direction, and the two first surfaces (2121) of each of the plurality of battery cells (21) in the battery cell array (20) face each other along the vertical direction
**characterized in that**
- each of the plurality of battery modules (2) further includes two straps (22) arranged at an interval, each strap (22) encompassing a periphery of the battery cell array (20) and comprising two long sides (221) and two short sides (222); the two long sides (221) face to the two first surfaces (2121) and extend along the horizontal direction; and the two short sides (222) face to the two second surfaces (2122) and extend along the vertical direction, and
- a first groove (23) is formed between two adjacent long sides (221) above one of the two first surfaces (2121) facing the upper cover (1), and the first bonding member (4) is disposed inside the first groove (23) and extends along the horizontal direction.

2. The battery pack according to claim 1, wherein the plurality of battery cells (21) are connected with the upper cover (1) via the first bonding member (4), one of the two first surfaces (2121) facing the upper cover (1) is in contact with the first bonding member (4).

3. The battery pack according to claim 1, wherein each of the plurality of battery modules (2) comprises at least two battery cell arrays (20) which are stacked along the vertical direction.

4. The battery pack according to claim 1, wherein a convex portion (11) disposed opposite to the first groove (23) and bonded with the first bonding member (4) is formed in an inner surface of the upper cover (1).

5. The battery pack according to claim 4, wherein the convex portion (11) extends into the first groove (23), and a thickness of the first bonding member (4) is smaller than a thickness of the two adjacent long sides (221) above the one of the two first surfaces (2121) facing the upper cover (1).

6. The battery pack according to any one of claims 1-5, wherein the battery pack further comprises a second bonding member (5) disposed on a lower surface of one of the plurality of battery modules (2), and the lower surface of the one of the plurality of battery modules (2) is connected with the lower enclosure (3) through the second bonding member (5).

7. The battery pack according to claim 6, wherein a second groove is formed between two adjacent long sides (221) below one of the two first surfaces (2121) away from the upper cover (1), and the second bonding member (5) is disposed within the second groove and extends along the horizontal direction.

8. The battery pack according to any one of claims 1-5, wherein each of the plurality of battery modules (2) further comprises two end plates (24) respectively disposed at two ends of the battery cell array (20) along the horizontal direction; the strap (22) encompasses a periphery of the battery cell array (20) and the two end plates (24); and a top surface of each of the two end plates (24) is provided with a boss protruding (241) out of an upper surface of the battery module (2) and located between the two adjacent long sides (221) above the one of the two first surfaces (2121) facing the upper cover (1).

9. The battery pack according to any one of claims 4 or 5, wherein each of the plurality of battery modules (2) is provided with two straps (22); and a plurality of convex portions (11) respectively corresponding to the first groove (23) of each of the plurality of battery modules (2) are formed in the upper cover (1).

## Patentansprüche

1. Batteriesatz, umfassend:
- einen Kasten, umfassend eine obere Abdeckung (1) und einen unteren Kasten (3), wobei sich die obere Abdeckung (1) über und in gesiegelter Verbindung mit dem unteren Kasten (3) befindet;
- eine Vielzahl von Batteriemodulen (2), die in dem Kasten angeordnet sind; und
- ein erstes Klebeelement (4), das auf einer oberen Oberfläche der Vielzahl von Batteriemodulen (2) angeordnet ist und zum Verbinden der Vielzahl von Batteriemodulen (2) mit der oberen Abdeckung (1) dient,
wobei
- jedes der Vielzahl von Batteriemodulen (2) eine Batteriezellengruppe (20) umfasst, die eine Vielzahl von entlang einer horizontalen Richtung angeordneten Batteriezellen (21) und eine Vielzahl von mit der Vielzahl von Batteriezellen (21) elektrisch verbundenen Sammelschienen (26) umfasst,
- jede der Vielzahl von Batteriezellen (21) eine Elektrodenanordnung (211) und ein Zellengehäuse (212) umfasst, wobei die Elektrodenanordnung (211) in dem Zellengehäuse (212) eingeschlossen ist und eine erste Elektrodenplatte (2111), eine zweite Elektrodenplatte (2112) und ein dazwischen angeordnetes Trennelement (2113) umfasst,
- die Elektrodenanordnung (211) eine flache gewickelte Konfiguration aufweist und Außenoberflächen der Elektrodenanordnung (211) zwei flache Seiten (2114) umfassen, die entlang einer vertikalen Richtung einander zugewandt sind; oder die Elektrodenanordnung (211) eine laminierte Konfiguration aufweist, wobei die erste Elektrodenplatte (2111), das Trennelement (2113) und die zweite Elektrodenplatte (2112) entlang einer vertikalen Richtung laminiert sind; und
- das Zellengehäuse (212) zwei erste Oberflächen (2121) und zwei zweite Oberflächen (2122) umfasst, wobei ein Flächeninhalt jeder der zwei ersten Oberflächen (2121) größer als ein Flächeninhalt jeder der zwei zweiten Oberflächen (2122) ist; die zwei zweiten Oberflächen (2122) jeder der Vielzahl von Batteriezellen (21) in der Batteriezellengruppe (20) entlang der horizontalen Richtung einander zugewandt sind und die zwei ersten Oberflächen (2121) jeder der Vielzahl von Batteriezellen (21) in der Batteriezellengruppe (20) entlang der vertikalen Richtung einander zugewandt sind,
**dadurch gekennzeichnet, dass**
- jedes der Vielzahl von Batteriemodulen (2) ferner zwei in einem Abstand angeordnete Gurte (22) umfasst, wobei die Gurte (22) jeweils einen Umfang der Batteriezellengruppe (20) umschließen und zwei lange Seiten (221) und zwei kurze Seiten (222) umfassen, wobei die zwei langen Seiten (221) den zwei ersten Oberflächen (2121) zugewandt sind und sich entlang der horizontalen Richtung erstrecken; und die zwei kurzen Seiten (222) den zwei zweiten Oberflächen (2122) zugewandt sind und sich entlang der vertikalen Richtung erstrecken; und
- eine erste Nut (23) zwischen zwei benachbarten langen Seiten (221) über einer der oberen Abdeckung (1) zugewandten der zwei ersten Oberflächen (2121) gebildet ist und das erste Klebeelement (4) in der ersten Nut (23) angeordnet ist und sich entlang der horizontalen Richtung erstreckt.

2. Batteriesatz nach Anspruch 1, wobei die Vielzahl von Batteriezellen (21) mittels des ersten Klebeelement (4) mit der oberen Abdeckung (1) verbunden sind, wobei sich eine der oberen Abdeckung (1) zugewandte der zwei ersten Oberflächen (2121) mit dem ersten Klebeelement (4) in Kontakt befindet.

3. Batteriesatz nach Anspruch 1, wobei jede der Vielzahl von Batteriemodulen (2) mindestens zwei Batteriezellengruppen (20) umfasst, die entlang der vertikalen Richtung gestapelt sind.

4. Batteriesatz nach Anspruch 1, wobei ein gegenüber von der ersten Nut (23) angeordneter und mit dem ersten Klebeelement (4) verklebter konvexer Abschnitt (11) in einer Innenoberfläche der oberen Abdeckung (1) gebildet ist.

5. Batteriesatz nach Anspruch 4, wobei sich der konvexe Abschnitt (11) in die erste Nut (23) erstreckt und eine Dicke des ersten Klebeelements (4) geringer als eine Dicke der zwei benachbarten langen Seiten (221) über der der oberen Abdeckung (1) zugewandten der zwei ersten Oberflächen (2121) ist.

6. Batteriesatz nach einem der Ansprüche 1-5, wobei der Batteriesatz ferner ein auf einer unteren Oberfläche eines der Vielzahl von Batteriemodulen (2) angeordnetes zweites Klebeelement (5) umfasst und die untere Oberfläche des einen der Vielzahl von Batteriemodulen (2) über das zweite Klebeelement (5) mit dem unteren Kasten (3) verbunden ist.

7. Batteriesatz nach Anspruch 6, wobei eine zweite Nut zwischen zwei benachbarten langen Seiten (221) unter einer von der oberen Abdeckung (1) abgelegenen der zwei ersten Oberflächen (2121) gebildet ist und das zweite Klebeelement (5) in der zweiten Nut angeordnet ist und sich entlang der horizontalen Richtung erstreckt.

8. Batteriesatz nach einem der Ansprüche 1-5, wobei jedes der Vielzahl von Batteriemodulen (2) ferner zwei Endplatten (24) umfasst, die an einem jeweiligen von zwei Enden der Batteriezellengruppe (20) entlang der horizontalen Richtung angeordnet sind; der Gurt (22) einen Umfang der Batteriezellengruppe (20) und die zwei Endplatten (24) umschließt; und eine obere Oberfläche jeder der zwei Endplatten (24) mit einem Vorsprung (241) versehen ist, der aus einer oberen Oberfläche des Batteriemoduls (2) ragt und sich zwischen den zwei benachbarten langen Seiten (221) über der der oberen Abdeckung (1) zugewandten der zwei ersten Oberflächen (2121) befindet.

9. Batteriesatz nach einem der Ansprüche 4 oder 5, wobei jedes der Vielzahl von Batteriemodulen (2) mit zwei Gurten (22) versehen ist; und eine Vielzahl von konvexen Abschnitten (11), die der jeweiligen ersten Nut (23) jeder der Vielzahl von Batteriemodulen (2) entsprechen, in der oberen Abdeckung (1) gebildet sind.

## Revendications

1. Bloc-batterie comprenant :
- une enceinte incluant un couvercle supérieur (1) et une enceinte inférieure (3), le couvercle supérieur (1) étant situé au-dessus et en raccordement étanche avec l'enceinte inférieure (3) ;
- une pluralité de modules de batterie (2) disposés à l'intérieur de l'enceinte ; et
- un premier élément de liaison (4) disposé sur une surface supérieure de la pluralité de modules de batterie (2) et destiné à raccorder la pluralité de modules de batterie (2) au couvercle supérieur (1)
dans lequel
- chacun de la pluralité de modules de batterie (2) inclut un réseau de cellules de batterie (20) comprenant une pluralité de cellules de batterie (21) agencées le long d'une direction horizontale et une pluralité de barres omnibus (26) électriquement connectées à la pluralité de cellules de batterie (21) ;
- chacune de la pluralité de cellules de batterie (21) inclut un ensemble électrode (211) et un boîtier de cellule (212), l'ensemble électrode (211) étant contenu dans le boîtier de cellule (212) et incluant une première plaque d'électrode (2111), une seconde plaque d'électrode (2112), et un séparateur (2113) disposé entre elles ;
- l'ensemble électrode (211) a une structure enroulée plate, et des surfaces externes de l'ensemble électrode (211) incluent deux côtés plats (2114) se faisant face le long d'une direction verticale ; ou l'ensemble électrode (211) a une configuration stratifiée, dans laquelle la première plaque d'électrode (2111), le séparateur (2113), et la seconde plaque d'électrode (2112) sont stratifiées le long d'une direction verticale ; et
- le boîtier de cellule (212) inclut deux premières surfaces (2121) et deux secondes surfaces (2122), une superficie de chacune des deux premières surfaces (2121) étant plus grande qu'une superficie de chacune des deux secondes surfaces (2122) ; les deux secondes surfaces (2122) de chacune de la pluralité de cellules de batterie (21) du réseau de cellules de batterie (20) se font face le long de la direction horizontale, et les deux premières surfaces (2121) de chacune de la pluralité de cellules de batterie (21) du réseau de cellules de batterie (20) se font face le long de la direction verticale
**caractérisé en ce que**
- chacun de la pluralité de modules de batterie (2) inclut en outre deux bandes (22) agencées selon un intervalle, chaque bande (22) englobant une périphérie du réseau de cellules de batterie (20) et comprenant deux côtés longs (221) et deux côtés courts (222) ; les deux côtés longs (221) font face aux deux premières surfaces (2121) et s'étendent le long de la direction horizontale ; et les deux côtés courts (222) font face aux deux secondes surfaces (2122) et s'étendent le long de la direction verticale, et
- une première rainure (23) est ménagée entre deux bords longs (221) adjacents au-dessus de l'une des deux premières surfaces (2121) faisant face au couvercle supérieur (1), et le premier élément de liaison (4) est disposé à l'intérieur de la première rainure (23) et s'étend le long de la direction horizontale.

2. Bloc-batterie selon la revendication 1, dans lequel la pluralité de cellules de batterie (21) sont raccordées au couvercle supérieur (1) par l'intermédiaire du premier élément de liaison (4), l'une des deux premières surfaces (2121) faisant face au couvercle supérieur (1) étant en contact avec le premier élément de liaison (4).

3. Bloc-batterie selon la revendication 1, dans lequel chacun de la pluralité des modules de batterie (2) comprend au moins deux réseaux de cellules de batterie (20) qui sont empilés le long de la direction verticale.

4. Bloc-batterie selon la revendication 1, dans lequel une partie convexe (11) disposée en regard de la première rainure (23) et liée avec le premier élément de liaison (4) est formée dans une surface interne du couvercle supérieur (1).

5. Bloc-batterie selon la revendication 4, dans lequel la partie convexe (11) s'étend dans la première rainure (23), et une épaisseur du premier élément de liaison (4) est inférieure à une épaisseur des deux côtés longs (221) adjacents au-dessus de ladite une des deux premières surfaces (2121) faisant face au couvercle supérieur (1).

6. Bloc-batterie selon l'une quelconque des revendications 1 à 5, dans lequel le bloc-batterie comprend en outre un second élément de liaison (5) disposé sur une surface inférieure d'un de la pluralité de modules de batterie (2), et la surface inférieure dudit un de la pluralité de modules de batterie (2) est raccordée à l'enceinte inférieure (3) à travers le second élément de liaison (5).

7. Bloc-batterie selon la revendication 6, dans lequel une seconde rainure est ménagée entre deux côtés longs (221) adjacents en dessous de l'une des deux premières surfaces (2121) à distance du couvercle supérieur (1), et le second élément de liaison (5) est disposé à l'intérieur de la seconde rainure et s'étend le long de la direction horizontale.

8. Bloc-batterie selon l'une quelconque des revendications 1 à 5, dans lequel chacun de la pluralité de modules de batterie (2) comprend en outre deux plaques d'extrémité (24) respectivement disposées au niveau de deux extrémités du réseau de cellules de batterie (20) le long de la direction horizontale ; la bande (22) englobe une périphérie du réseau de cellules de batterie (20) et les deux plaques d'extrémité (24) ; et une surface supérieure de chacune des deux plaques d'extrémité (24) est pourvue d'un bossage saillant (241) hors d'une surface supérieure du module de batterie (2) et situé entre les deux côtés longs (221) adjacents au-dessus de ladite une des deux premières surfaces (2121) faisant face au couvercle supérieur (1).

9. Bloc-batterie selon l'une quelconque des revendications 4 ou 5, dans lequel chacun de la pluralité de modules de batterie (2) est pourvu de deux bandes (22) ; et une pluralité de parties convexes (11) correspondant respectivement à la première rainure (23) de chacun de la pluralité de modules de batterie (2) sont formées dans le couvercle supérieur (1).
